# EUROPEAN PATENT SPECIFICATION

(11) **EP 4 282 737 B1**
(45) Date of publication and mention of the grant of the patent: **30.09.2026**
(21) Application number: 22175530.9
(22) Date of filing: 25.05.2022
(51) Int. Cl.: B62D 25/06

(54) **A SIDE CRASH RESISTANT ROOF ASSEMBLY FOR A VEHICLE**
SEITENAUFPRALLBESTÄNDIGE DACHANORDNUNG FÜR EIN FAHRZEUG
ENSEMBLE TOIT RÉSISTANT À LA COLLISION LATÉRALE D'UN VÉHICULE

(43) Date of publication of application: 29.11.2023
(73) Proprietor: TOYOTA JIDOSHA KABUSHIKI KAISHA, Toyota-shi, Aichi-ken, 471-8571 (JP)
(72) Inventor: LEITÃO, Nuno Miguel Cardoso, 1140 BRUSSELS (BE); GORU, Venu Gopal, 1140 BRUSSELS (BE); ALTUNCAN, Hakan, 1140 BRUSSELS (BE)
(74) Representative: Cabinet Beau de Loménie

(56) References cited:
- EP-A1- 1 927 533
- JP-A- H10 152 070
- JP-B2- 5 464 734
- US-A1- 2016 129 944

## Description

### FIELD OF THE DISCLOSURE

The present disclosure concerns a roof assembly for a vehicle and a vehicle comprising such a roof assembly.

### BACKGROUND OF THE DISCLOSURE

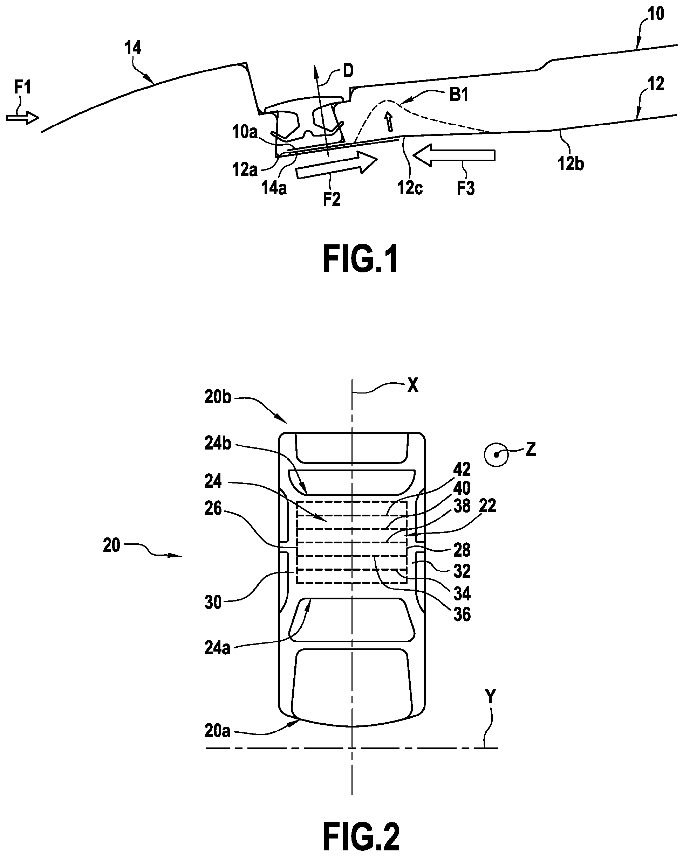

As schematically illustrated in Figure 1, it is known that most vehicles are configured with a roof panel 10 extending along a longitudinal direction (perpendicular to Figure 1) between a front and a rear part of the vehicle and supported centrally by several parallel transversal roof dent reinforcement members 12 (only one is partially represented in the Figure 1 cross section) spaced apart from each other along the longitudinal direction below the roof panel.

A side member 14 is generally connected on one side 10a of the roof panel 10 to the latter and to the spaced apart roof dent reinforcement members 12.

More particularly, the roof dent reinforcement members 12 have two opposed ends. One end, 12a, is sandwiched between the above side 10a of the roof panel 10 and an inner free end 14a of the side member 14 along a stacking direction D that is substantially perpendicular to the longitudinal extension direction of the roof panel (perpendicular to Figure 1) and to the transversal roof dent reinforcement members. This sandwiched configuration may be welded and may thus form a welded joint. The sandwiched configuration is also present at the other opposed end of the roof dent reinforcement member 12 (not represented) involving both another vehicle side member and an opposite side of the roof panel 10.

It has been observed that when a side or lateral crash scenario takes place, the side member 14 is subjected to side external forces (these forces are schematically represented by arrow F1 on Figure 1) oriented towards the inner of the vehicle. These external forces propagate through the side member 14 from outwards towards the inner free end 14a of the side member (see arrow F2) that is located both below the side 10a of the roof panel 10 and the ends 12a of the spaced apart transversal roof dent reinforcement members 12.

The sandwiched ends 12a of the transversal roof dent reinforcement members 12 are not strictly aligned with the body 12b of the corresponding transversal roof dent reinforcement member but make a slight angle to this body as shown in Figure 1.

Thus, in case of a side crash scenario, the external forces (F2) push inwardly the inner free end 14a of the side member towards the transversal roof dent reinforcement members 12 which each mechanically react with an opposite reaction force F3. This causes a portion 12c of each of the concerned transversal roof dent reinforcement members that is located between the end 12a and the body 12b to buckle, as shown in dotted lines with the buckled shape B1. This buckling phenomenon extends upwardly towards the roof panel 10 and pushes the latter towards the outside of the vehicle, thereby leading to welded joint failure and opening of the vehicle cabin to the exterior.

This undesired situation may represent a risk for the safety of the vehicle occupants.

US 2016/0129944 A1 describes a vehicle body structure of vehicle side portion.

In view of the above, it would thus be desirable to remedy at least one of the above drawbacks.

### DISCLOSURE OF THE INVENTION

According to a purpose of the present disclosure a roof assembly for a vehicle may be configured to improve the safety of the vehicle occupants.
To meet this purpose, according to the present disclosure a roof assembly for a vehicle is proposed as defined in claim 1.

The above configuration (geometrical feature) makes it possible to control the deformation of the at least one roof reinforcement member during a side impact crash scenario since the step-shaped segment constitutes a weakened area in the at least one roof reinforcement member. More particularly, it leads to localized downwardly-oriented (i.e. away from the roof) buckling of the step-shaped segment and thus control of the buckling phenomenon.

Also, the proposed geometrical configuration is of particularly simple design and easy to implement in the vehicle, without questioning the whole design of the at least one roof reinforcement member.

According to further possible aspects:
- the roof assembly comprises another side member connected to the other longitudinal side of the roof, the at least one roof reinforcement member being connected through the other end of its first and second opposite ends to the roof from the underside thereof and to the other side member, the at least one roof reinforcement member comprises a step-shaped segment that extends in a downward direction away from the roof, the step-shaped segment being arranged between the other end of the at least one roof reinforcement member and the central segment thereof;
- the step-shaped segment is deprived of any side wall extending in a vertical direction along the transverse extending direction of the at least one roof reinforcement member;
- the second concave portion follows immediately the first convex portion;
- the step-shaped segment comprises a third intermediate portion connecting the first convex portion and the second concave portion;
- the third intermediate portion is a flat portion;
- at least one of the first convex portion and the second concave portion comprises a portion of cylinder that is defined by a curvature radius;
- the first convex portion has a curvature radius in the range between 0.1 and 10mm;
- the second concave portion has a curvature radius in the range between 0.1 and 10mm;
- the fixed end of the at least one roof reinforcement member comprises a flat portion;
- the at least one roof reinforcement member comprises a plurality of roof reinforcement members extending each transversally relative to the longitudinal direction of the roof and being separate from each other along the longitudinal direction of the roof.

According to the present disclosure a vehicle comprising a roof assembly as briefly mentioned above is also proposed.

### BRIEF DESCRIPTION OF THE DRAWINGS

The present invention may be better understood and its numerous other objects and advantages will become apparent to those skilled in the art by reference to the accompanying drawings wherein like reference numerals refer to like elements in the several figures and in which :
Figure 1 is a schematic representation of a transverse cross section illustrating a portion of a conventional roof assembly and its deformation when submitted to a side impact;
Figure 2 is a schematic representation of a top view of a vehicle according to a first embodiment of the present disclosure;
Figure 3 is a schematic partial perspective view of the roof assembly of Figure 2;
Figure 4 is a schematic representation of a transverse cross section (viewed along section A-A) illustrating a portion of the roof assembly of Figure 3;
Figure 5 is a schematic partial enlarged view of the step-shaped segment 34d of Figure 4;
Figure 6 is a schematic perspective representation of the roof assembly portion of Figure 4.

### DESCRIPTION OF PREFERRED EMBODIMENTS

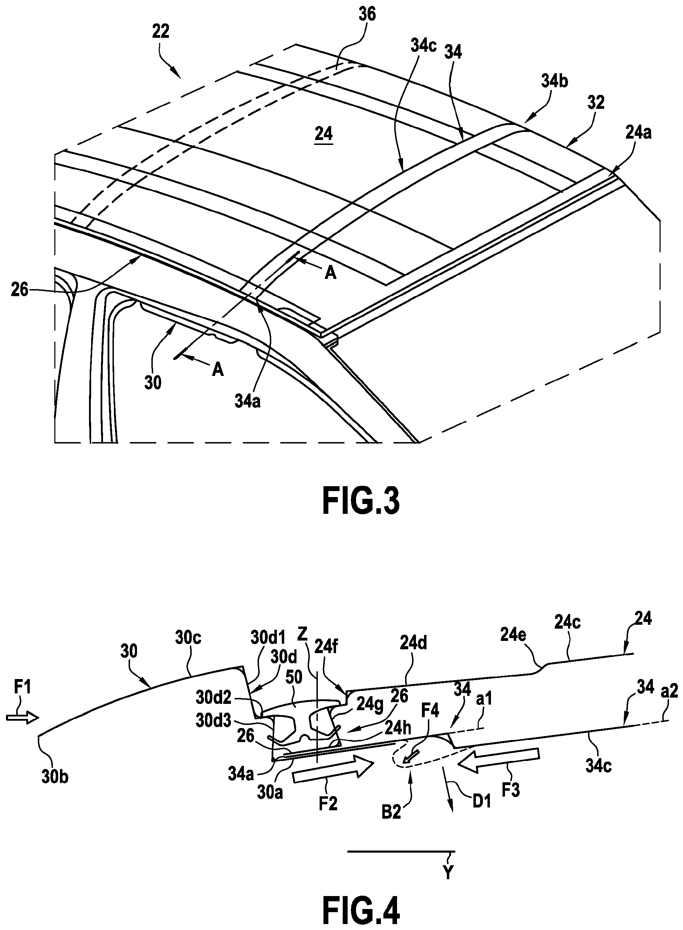

A vehicle 20 in accordance with a first embodiment of the present disclosure is schematically illustrated in a top view on Figure 2, in a partial perspective view on Figure 3 and in a cross section along a cut plane A-A in Figure 4.

This vehicle, e.g. a motor vehicle, an electric vehicle or an hybrid vehicle, comprises a front part 20a and a rear part 20b that are both aligned along a longitudinal direction X.

Vehicle 20 comprises a roof assembly 22 that comprises:
- a roof or roof panel 24 (represented by a rectangle in dotted lines on Figure 2) extending along the longitudinal direction X and having two longitudinal sides 26, 28 that extend each in a direction parallel to longitudinal direction X from a first front end 24a of the roof to a second opposite rear end 24b of the latter;
- at least one side member that is generally part of a frame or structure of the vehicle, is connected to one of the two longitudinal sides 26, 28 of the roof 24; in the present embodiment two side members 30, 32 that extend longitudinally along the two longitudinal sides 26, 28 of the roof are respectively connected to these two longitudinal sides;
- at least one roof reinforcement member arranged below the roof 24 in a vertical direction of the roof assembly (this direction Z is perpendicular to the plane of Figure 2; the vertical direction is considered when the vehicle is on the ground and the longitudinal direction X is generally horizontal) and that extends transversally relative to the longitudinal direction X of the roof along a transverse or lateral direction Y, from a first end to a second opposite end of the roof reinforcement member; in the present embodiment several roof reinforcement members 34, 36, 38, 40 and 42 are spaced apart along the longitudinal direction X, parallel to each other along respective transverse positions as shown in transverse dotted lines in Figure 2. The number and position of the roof reinforcement members can vary and are not limited to the representation on the Figures.

The following description applies to the roof reinforcement member 34 that is more particularly represented on Figures 3 and 4 but applies equally to the other roof reinforcement members located under the roof whatever their number and position.

The roof reinforcement member 34 has a first end 34a and a second opposite end 34b and is connected, through one of its first and second opposite ends called the fixed end, here first end 34a, to the roof 24 from the underside thereof and to the first side member 30 as will be detailed later.

The same connexion arrangement applies to the second opposed end 34b (fig. 3), also called fixed end and that is connected to the roof 24 from the underside thereof and to the second side member 32.

As more particularly represented in Figure 4, the first end 34a is arranged between the longitudinal side or flange 26 of the roof 24 and an inner end or flange 30a of the first side member 30 so as to form a sandwiched configuration in which the first end 34a is interposed between longitudinal side 26 and inner end 30a in a vertical stacking arrangement along vertical direction denoted Z. To be noted that the different components of this superimposed configuration have flat portions substantially perpendicular to their stacking direction so as to be easily fixed to one another. Practically, the first end 34a can be first fixed to the longitudinal side 26, e.g. through welding, and then the resulting welded assembly can be fixed, e.g. welded, to inner end 30a.

More particularly, the roof reinforcement member 34 comprises a central segment 34c that is located between the first end 34a and the second opposite end 34b and extends in a central portion of the roof assembly 22 (fig. 3).

This central segment 34c is also fixed to the roof 24 from the underside thereof (in a known manner, not represented in the drawings) in order to vertically support the roof in its central portion above the inner cabin of the vehicle where occupants can sit.

As shown in Figure 4, the roof reinforcement member 34 further comprises a step-shaped segment 34d that is arranged between the first end 34a and the central segment 34c (although not represented, a similar or identical arrangement may be present between the second opposed end 34b of the roof reinforcement member 34 and the central segment 34c).

In the present embodiment the step-shaped segment 34d extends away from the first end 34a in a downward direction D1, i.e. away from the roof 24, so as to join the first end 34a and the central segment 34c. Both first end 34a and central segment 34c are not aligned with each other but they are aligned respectively along parallel axes a1 and a2 as shown in Figure 4.
Thanks to this configuration, in case of a side or lateral crash scenario involving the side member 30, the latter is subjected to side external forces (arrow F1 on Figure 4) oriented towards the inner (or central part) of the vehicle. These external forces propagate through the side member 30 from the outer periphery 30b thereof towards the inner free end 30a of the side member.
The propagated forces (arrow F2) push inwardly, along axis a1, the inner free end 30a to which the first end 34a is fixed as previously described. These forces thus apply on the upper part of the step-shaped segment 34d. As the transversal roof dent reinforcement member 34 is fixed both to the roof 24 from underside (not represented) and to the other opposite side member 32 through its second end 34b (fig. 3), according to the action-reaction principle an opposite reaction force F3 (fig. 4) applies along axis a2 (vertically downwardly shifted relative to axis a1) on the lower part of the step-shaped segment 34d. The two opposed forces F2 and F3 applied to vertically shifted parts of the step-shaped segment 34d respectively along parallel axes a1 and a2 cause downwardly-oriented buckling of the step-shaped segment 34d, as shown in dotted lines with the buckled shape B2. This buckling phenomenon is mainly directed downwardly and does no longer extend upwardly towards the roof panel 24 as in the prior art, which thus makes it possible to remedy the prior art drawbacks (welded joint failure, e.g. spot weld failure, and opening of the vehicle cabin to the exterior along with the associated safety issues for the cabin vehicle occupants).

The downwardly-oriented (away from roof 24) step-shaped segment 34d makes it possible to control the mechanical deformation of this segment when submitted to a side or lateral crash scenario as described above and, more particularly, to orient the deformation (buckling) mainly in a downward direction and also sideways towards the outer of the vehicle as shown by the arrow F4 in Figure 4 which is oriented at an angle (downwardly and outwardly) with respect to axes a1 and a2. This favoured buckling direction provides greater safety for occupants as their heads do not run the risk of being injured by the deformation as it would be the case with a downwardly and inwardly oriented buckling direction.

The step-shaped segment 34d is represented schematically on Figure 4 with a vertical (or slightly inclined to the vertical Z) or abrupt step to explain the principle underlying the invention. As illustrated in Figure 4, the step-shaped segment 34d may be slightly inclined to the perpendicular between axes a1 and a2, i.e. between direction for extension of end 34a and central segment 34c.

However, as illustrated in Figures 4 to 6, the step-shaped segment 34d may take a less steep shape and may comprise at least a first convex portion 34d1 proximate the first end 34a and a second concave portion 34d2 away from the first end 34a (and proximate the central segment 34c). The steepness of the step depends on the height to length ratio of the step. A high height to length ratio may be better to resist side crash safety as a more significant step may more easily control buckle in the desired direction. However, a sufficient mechanical rigidity has to be provided to the roof panel 24 by the roof dent reinforcement member 34. In this respect, a too high ratio may make the roof dent reinforcement member 34 weaker against mechanical forces that would be applied in a perpendicular direction to the roof panel 24 (up-down direction of vehicle).

Thus, both requirements have to be satisfied: 1) crash safety and 2) roof rigidity (strength against dentability) and the skilled person would find an optimized ratio based on iterations of shapes with some different height to length ratios and then test for each the above performances regarding both criteria 1) and 2), before selecting the optimized shape.

The second concave portion 34d2 may follow immediately the first convex portion 34d1, i.e. no intermediate portion is arranged between the two previously defined portions.

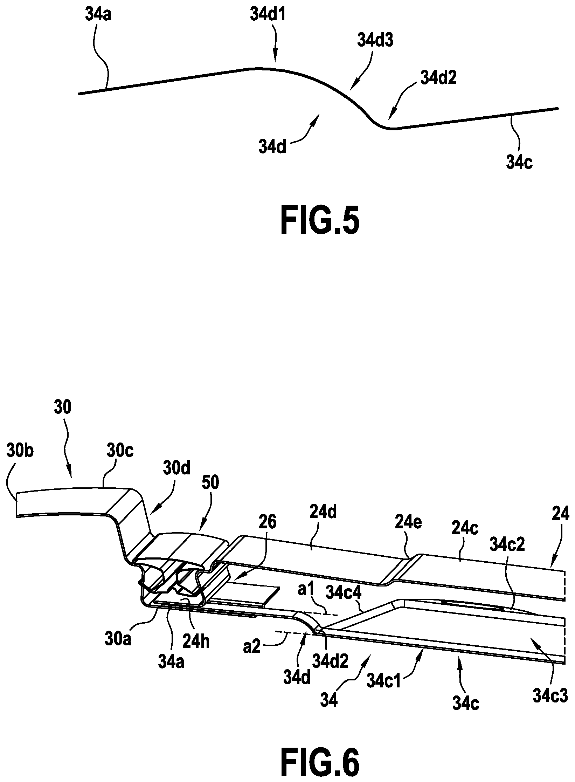

Alternatively, as shown in Figure 5, a third intermediate portion 34d3 may be arranged so as to connect the first convex portion 34d1 and the second concave portion 34d. This arrangement may be useful to connect the two inverted curved shapes. The selection of the length (axial extension) of the third intermediate portion 34d3 may prove to be useful in order to adjust the proper height or vertical offset between the two axes a1 and a2 with both inverted curved shapes 34d1 and 34d2 of predetermined sizes.

The third intermediate portion 34d3 may be a flat portion.

According to an embodiment, at least one of the first convex portion 34d1 and the second concave portion 34d2 may comprise a portion of cylinder that is defined by a curvature radius.

According to a further embodiment, the first convex portion 34d1 may have a curvature radius in the range lying between 0.1 and 10mm and the second concave portion 34d2 may have a curvature radius in the range lying between 0.1 and 10mm.

Whatever the configuration of the step-shaped segment 34d, it is to be noted that this segment which extends in a transverse direction (Y), or left-right vehicle direction, from the first end 34a towards the central segment 34c and vertically (Z) may have, in an embodiment, no wall flanking this segment and that would extend vertically with respect to the latter. In other words, the step-shaped segment 34d is substantially flat in shape along its direction of extension.

A side wall could increase the force required to cause buckling of the step-shaped segment 34d. As a consequence, the buckling could be delayed, and this could change the deformation mode of the structure during crash.

However, in another embodiment for a different vehicle geometry, this might not be the case and a side wall can be beneficial instead. This depends on the vehicle geometry and the target deformation modes during crash.

The above description may apply to vehicle roof assemblies having different detailed configurations than that represented on the Figures and that will be described hereinafter.

More particularly, the side member 30 which has an elongate shape along longitudinal direction X in its portion adjacent the roof 24 (figs. 2 and 3) has a transverse or cross section as shown in Figures 4 and 6 and may comprise, from an outer end 30b, opposed to the end 30a, an outer curved, here convex, portion 30b, followed by a step-shaped portion 30d which comprises a first downwardly-extending wall 30d1, a substantially perpendicular edge 30d2 (here horizontal) and a second downwardly-extending wall 30d3 that is slightly inclined outwardly with respect to the edge so as to form a recess or setback. The free end 30a (ex: flange), which has a rather flat (here substantially horizontal) configuration extends away from the wall 30d3 towards the reinforcement members.

The roof 24, as shown in the Figure 4 cross section, comprises a central portion 24c which extends towards its longitudinal side 26 through a substantially flat portion 24d that is lower than central portion 24c and connected thereto by a smooth descending step 24e. The portion 24d extends outwardly until a downwardly-extending step 24f which is followed by a further downwardly-extending wall 24g, slightly inclined inwardly with respect to the step 24e so as to from a recess or setback. The longitudinal side 26 ends with a flat portion 24h (ex: flange) that extends outwardly parallel to the first end 34a and free end 30a. The two facing configurations with the edge 30d2 and following inclined wall 30d3 on one side and the step 24f and the following inclined wall 24g on the opposite side form a kind of dovetail configuration. A moulding part 50 is arranged in this location between the side member and the longitudinal side 26 of the roof 24 and rests against the horizontal flat portions (edge 30d2 and lower portion of the step 24f) at the upper part of moulding part 50. The moulding part 50, e.g. made of soft rubber, serves as a tight-sealing member between the two components above the previously-described stacking arrangement of elements (flat portion or flange 24h, first end 34a and free end 30a) and also serves to hide the welded portions (spot welding flanges) 24h, 34a and 30a and ensure good appearance of the vehicle roof. The extending lower legs of the moulding part 50 deform after assembly to ensure some sealing by contacting the adjacent components and also to maintain their position.

Figure 6 shows further details of an exemplary roof reinforcement member 34.

In particular, the first end 34a which lies between the free end 30a and the end portion 24h extends axially away from the stacking arrangement through the terminating edge of the free end 34a. Then the roof reinforcement member 34 takes the form of the downwardly-extending step-shaped segment 34d before connecting with the downwardly offset central segment 34c.

As represented in Figure 6, the central segment 34c starts after the concave portion 34d2, and extends away therefrom both axially along the axis a2 and along an oblique ascending direction towards the roof central portion 24c across the whole width of the reinforcing member (same width as for the step-shaped segment 34d). The central segment 34c thus forms a central body delimited by bottom, upper and side or lateral surfaces 34c1, 34c2, 34c3 (the opposite side or lateral surface is hidden on the view) with an oblique front surface 34c4 that gradually raises the level of the central segment above axis a1 and through a level located below the roof central portion 24c so as to enable fixing (in a known manner) between the two elements at predetermined locations, not represented in the drawing.

As already mentioned above, the particular configuration (details, shapes, dimensions, etc.) of the side member 30, the roof 24 and the roof reinforcement member 34 may vary depending on the vehicle and different constraints.

Also, the above description of these elements applies to the other side of the roof where the side member 32 is located and the same controlled buckling deformation occurs in a case a side crash scenario occurs on the other vehicle side.

## Claims

1. A roof assembly (22) for a vehicle (20) comprising:
- a roof (24) extending along a longitudinal direction (X) between a front and a rear part of the vehicle and having two longitudinal sides,
- a side member (30, 32) connected to one of the two longitudinal sides (26, 28) of the roof,
- at least one roof reinforcement member (34-42) arranged below the roof in a vertical direction (Z) of the roof assembly and extending transversally relative to the longitudinal direction of the roof from a first end (34a) to a second opposite end (34b), the at least one roof reinforcement member being connected, through one of its first and second opposite ends called the fixed end (34a), to the roof (24) from the underside thereof and to the side member (30, 32), the at least one roof reinforcement member comprising a central segment (34c) between both first (34a) and second (34b) opposite ends,
the at least one roof reinforcement member (34) comprising a step-shaped segment (34d) that extends in a downward direction away from the roof, the step-shaped segment (34b) being arranged between the fixed end (34a) of the at least one roof reinforcement member and the central segment (34c) thereof, the central segment (34c) forming a central body delimited by bottom, upper and side or lateral surfaces (34c1, 34c2, 34c3) with an oblique front surface (34c4) that gradually raises the level of the central segment (34c) above an axis (a1) along which the first end (34a) is aligned and through a level located below a roof central portion (24c) of the roof (24), wherein the step-shaped segment (34d) comprising, along the transverse extending direction of the at least one roof reinforcement member (34), a first convex portion (34d1) proximate the fixed end (34a) of the at least one roof reinforcement member and a second concave portion (34d2) away from the fixed end (34a), the central segment (34c) starting after the concave portion (34d2),
**characterized in that** the central segment (34c) is aligned along an axis (a2) that is parallel with axis (a1) and extends away from the concave portion both axially along the axis (a2) and along an oblique ascending direction towards the roof central portion (24c) across the whole width of the reinforcing member, the step-shaped segment (34) extending away from the first end (34a) in the downward direction away from the roof (24), so as to join the first end (34a) and the central segment (34c).

2. The roof assembly according to claim 1, **characterized in that** it comprises another side member (32) connected to the other longitudinal side (28) of the roof, the at least one roof reinforcement member (34) being connected through the other end (34b) of its first and second opposite ends to the roof (24) from the underside thereof and to the other side member (32), the at least one roof reinforcement member comprises a step-shaped segment that extends in a downward direction away from the roof, the step-shaped segment being arranged between the other end (34b) of the at least one roof reinforcement member and the central segment (34c) thereof.

3. The roof assembly according to claim 1 or 2, **characterized in that** the step-shaped segment (34d) is deprived of any side wall extending in a vertical direction along the transverse extending direction of the at least one roof reinforcement member.

4. The roof assembly according to claim 1, **characterized in that** the second concave portion (34d2) follows immediately the first convex portion (34d1).

5. The roof assembly according to claim 1, **characterized in that** the step-shaped segment (34d) comprises a third intermediate portion (34d3) connecting the first convex portion (34d1) and the second concave portion (34d2).

6. The roof assembly according to claim 5, **characterized in that** the third intermediate portion (34d3) is a flat portion.

7. The roof assembly according to any one of claims 1, 4 to 6, **characterized in that** at least one of the first convex portion (34d1) and the second concave portion (34d2) comprises a portion of cylinder that is defined by a curvature radius.

8. The roof assembly according to claim7, **characterized in that** the first convex portion (34d1) has a curvature radius in the range between 0.1 and 10mm.

9. The roof assembly according to claim 7, **characterized in that** the second concave portion (34d2) has a curvature radius in the range between 0.1 and 10mm.

10. The roof assembly according to any preceding claim, **characterized in that** the fixed end (34a) of the at least one roof reinforcement member (34) comprises a flat portion.

11. The roof assembly according to any preceding claim, **characterized in that** the at least one roof reinforcement member comprises a plurality of roof reinforcement members (34-40) extending each transversally relative to the longitudinal direction (X) of the roof (24) and being separate from each other along the longitudinal direction of the roof.

12. A vehicle (20) comprising a roof assembly (22) according to any preceding claim.

## Patentansprüche

1. Dachanordnung (22) für ein Fahrzeug (20), umfassend:
- ein Dach (24), das sich entlang einer Längsrichtung (X) zwischen einem vorderen und einem hinteren Teil des Fahrzeugs erstreckt und zwei Längsseiten aufweist,
- ein seitliches Element (30, 32), das mit einer der beiden Längsseiten (26, 28) des Dachs verbunden ist,
- mindestens ein Dachverstärkungselement (34 bis 42), das unterhalb des Daches in einer vertikalen Richtung (Z) der Dachanordnung angeordnet ist und sich im Verhältnis zur Längsrichtung des Daches von einem ersten Ende (34a) bis zu einem zweiten gegenüberliegenden Ende (34b) quer erstreckt, wobei das mindestens eine Dachverstärkungselement, durch eines von seinem ersten und seinem zweiten gegenüberliegenden Ende, das als festes Ende (34a) bezeichnet wird, mit dem Dach (24) von der Unterseite desselben aus und mit dem seitlichen Element (30, 32) verbunden ist, wobei das mindestens eine Dachverstärkungselement ein zentrales Segment (34c) zwischen sowohl dem ersten (34a) als auch dem zweiten (34b) gegenüberliegenden Ende umfasst,
wobei das mindestens eine Dachverstärkungselement (34) ein stufenförmiges Segment (34d) umfasst, das sich in einer Abwärtsrichtung von dem Dach weg erstreckt, wobei das stufenförmige Segment (34b) zwischen dem festen Ende (34a) des mindestens einen Dachverstärkungselements und dem zentralen Segment (34c) desselben angeordnet ist, wobei das zentrale Segment (34c) einen zentralen Körper bildet, der durch untere, obere und seitliche bzw. laterale Oberflächen (34c1, 34c2, 34c3) begrenzt ist, mit einer schrägen Vorderfläche (34c4), die das Niveau des zentralen Segments (34c) oberhalb einer Achse (a1) anhebt, an der entlang das erste Ende (34a) ausgerichtet ist, und durch ein Niveau geht, das sich unterhalb eines zentralen Dachabschnitts (24c) des Daches (24) befindet, wobei das stufenförmige Segment (34d) entlang der sich quer erstreckenden Richtung des mindestens einen Dachverstärkungselements (34) einen ersten konvexen Abschnitt (34d1) in der Nähe des festen Endes (34a) des mindestens einen Dachverstärkungselements und einen zweiten konkaven Abschnitt (34d2) von dem festen Ende (34a) entfernt umfasst, wobei das zentrale Segment (34c) nach dem konkaven Abschnitt (34d2) beginnt,
**dadurch gekennzeichnet, dass** das zentrale Segment (34c) entlang einer Achse (a2) ausgerichtet ist, die zu der Achse (a1) parallel ist und sich von dem konkaven Abschnitt weg sowohl axial entlang der Achse (a2) als auch entlang einer schräg ansteigenden Richtung zu dem zentralen Dachabschnitt (24c) hin über die gesamte Breite des Verstärkungselements erstreckt, wobei sich das stufenförmige Segment (34) von dem ersten Ende (34a) weg in der Abwärtsrichtung von dem Dach (24) weg erstreckt, um das erste Ende (34a) und das zentrale Segment (34c) zusammenzufügen.

2. Dachanordnung nach Anspruch 1, **dadurch gekennzeichnet, dass** sie ein anderes seitliches Element (32) umfasst, das mit der anderen Längsseite (28) des Daches verbunden ist, wobei das mindestens eine Dachverstärkungselement (34) über das andere Ende (34b) seines ersten und zweiten gegenüberliegenden Endes mit dem Dach (24) von der Unterseite desselben aus und mit dem anderen seitlichen Element (32) verbunden ist, das mindestens eine Dachverstärkungselement ein stufenförmiges Segment umfasst, das sich in einer Abwärtsrichtung von dem Dach weg erstreckt, wobei das stufenförmige Segment zwischen dem anderen Ende (34b) des mindestens einen Dachverstärkungselements und dem zentralen Segment (34c) desselben angeordnet ist.

3. Dachanordnung nach Anspruch 1 oder 2, **dadurch gekennzeichnet, dass** das stufenförmige Segment (34d) keine Seitenwand aufweist, die sich in einer vertikalen Richtung entlang der sich quer erstreckenden Richtung des mindestens einen Dachverstärkungselements erstreckt.

4. Dachanordnung nach Anspruch 1, **dadurch gekennzeichnet, dass** der zweite konkave Abschnitt (34d2) sofort auf den ersten konvexen Abschnitt (34d1) folgt.

5. Dachanordnung nach Anspruch 1, **dadurch gekennzeichnet, dass** das stufenförmige Segment (34d) einen dritten Zwischenabschnitt (34d3) umfasst, der den ersten konvexen Abschnitt (34d1) und den zweiten konkaven Abschnitt (34d2) verbindet.

6. Dachanordnung nach Anspruch 5, **dadurch gekennzeichnet, dass** der dritte Zwischenabschnitt (34d3) ein flacher Abschnitt ist.

7. Dachanordnung nach einem der Ansprüche 1, 4 bis 6, **dadurch gekennzeichnet, dass** mindestens einer von dem ersten konkaven Abschnitt (34d1) und dem zweiten konkaven Abschnitt (34d2) einen Zylinderabschnitt umfasst, der durch einen Krümmungsradius definiert ist.

8. Dachanordnung nach Anspruch 7, **dadurch gekennzeichnet, dass** der erste konkave Abschnitt (34d1) einen Krümmungsradius in dem Bereich zwischen 0,1 und 10 mm aufweist.

9. Dachanordnung nach Anspruch 7, **dadurch gekennzeichnet, dass** der zweite konkave Abschnitt (34d2) einen Krümmungsradius in dem Bereich zwischen 0,1 und 10 mm aufweist.

10. Dachanordnung nach einem der vorhergehenden Ansprüche, **dadurch gekennzeichnet, dass** das feste Ende (34a) des mindestens einen Dachverstärkungselements (34) einen flachen Abschnitt umfasst.

11. Dachanordnung nach einem der vorhergehenden Ansprüche, **dadurch gekennzeichnet, dass** das mindestens eine Dachverstärkungselement eine Vielzahl von Dachverstärkungselementen (34 bis 40) umfasst, die sich jeweils im Verhältnis zur Längsrichtung (X) des Daches (24) quer erstrecken und entlang der Längsrichtung des Daches voneinander getrennt sind.

12. Fahrzeug (20), umfassend eine Dachanordnung (22) nach einem der vorhergehenden Ansprüche.

## Revendications

1. Ensemble de toit (22) pour un véhicule (20) comprenant :
un toit (24) s'étendant le long d'une direction longitudinale (X) entre une partie avant et une partie arrière du véhicule et ayant deux côtés longitudinaux,
un élément latéral (30, 32) raccordé à l'un des deux côtés longitudinaux (26, 28) du toit,
au moins un élément de renforcement de toit (34 - 42) agencé sous le toit dans une direction verticale (Z) de l'ensemble de toit et s'étendant, de manière transversale, par rapport à la direction longitudinale du toit à partir d'une première extrémité (34a) jusqu'à une deuxième extrémité (34b) opposée, le au moins un élément de renforcement de toit étant raccordé, par le biais de l'une de ses première et deuxième extrémité opposées, dénommée extrémité fixe (34a), au toit (24) à partir de sa face inférieure et à l'élément latéral (30, 32), le au moins un élément de renforcement de toit comprenant un segment central (34c) à la fois entre les première (34a) et deuxième extrémités (34b) opposées,
le au moins un élément de renforcement de toit (34) comprenant un segment en forme de gradin (34d) qui s'étend dans une direction descendante à l'opposé du toit, le segment en forme de gradin (34b) étant agencé entre l'extrémité fixe (34a) du au moins un élément de renforcement de toit et son segment central (34c), le segment central (34c) formant un corps central délimité par des surfaces inférieure, supérieure et latérales (34c1, 34c2, 34c3) avec une surface avant oblique (34c4) qui élève progressivement le niveau du segment central (34c) au-dessus d'un axe (a1) le long duquel la première extrémité (34a) est alignée, et en passant par un niveau situé sous une partie centrale de toit (24c) du toit (24), dans lequel le segment en forme de gradin (34d) comprend, le long de la direction d'extension transversale du au moins un élément de renforcement de toit (34), une première partie convexe (34d1) à proximité de l'extrémité fixe (34a) du au moins un élément de renforcement de toit et une deuxième partie concave (34d2) à l'opposé de l'extrémité fixe (34a), le segment central (34c) commençant après la partie concave (34d2),
**caractérisé en ce que** le segment central (34c) est aligné le long d'un axe (a2) qui est parallèle à l'axe (a1) et s'étend en éloignement de la partie concave à la fois de manière axiale le long de l'axe (a2) et le long d'une direction ascendante oblique vers la partie centrale de toit (24c) sur toute la largeur de l'élément de renforcement, le segment en forme de gradin (34) s'étendant en éloignement de la première extrémité (34a) dans la direction descendante en éloignement du toit (24), afin d'assembler la première extrémité (34a) et le segment central (34c).

2. Ensemble de toit selon la revendication 1, **caractérisé en ce qu'**il comprend un autre élément latéral (32) raccordé à l'autre côté longitudinal (28) du toit, le au moins un élément de renforcement de toit (34) étant raccordé, par le biais de l'autre extrémité (34b) de ses première et deuxième extrémités, au toit (24) à partir de sa face inférieure et jusqu'à l'autre élément latéral (32), le au moins un élément de renforcement de toit comprend un segment en forme de gradin qui s'étend dans une direction descendante en éloignement du toit, le segment en forme de gradin étant agencé entre l'autre extrémité (34b) du au moins un élément de renforcement de toit et son segment central (34c).

3. Ensemble de toit selon la revendication 1 ou 2, **caractérisé en ce que** le segment en forme de gradin (34d) est dépourvu de paroi latérale s'étendant dans une direction verticale le long de la direction d'extension transversale du au moins un élément de renforcement de toit.

4. Ensemble de toit selon la revendication 1, **caractérisé en ce que** la deuxième partie concave (34d2) suit immédiatement la première partie convexe (34d1).

5. Ensemble de toit selon la revendication 1, **caractérisé en ce que** le segment en forme de gradin (34d) comprend une troisième partie intermédiaire (34d3) raccordant la première partie convexe (34d1) et la deuxième partie concave (34d2).

6. Ensemble de toit selon la revendication 5, **caractérisé en ce que** la troisième partie intermédiaire (34d3) est une partie plate.

7. Ensemble de toit selon l'une quelconque des revendications 1, 4 à 6, **caractérisé en ce qu'**au moins l'une parmi la première partie convexe (34d1) et la deuxième partie concave (34d2) comprend une partie de cylindre qui est définie par un rayon de courbure.

8. Ensemble de toit selon la revendication 7, **caractérisé en ce que** la première partie convexe (34d1) a un rayon de courbure dans la plage comprise entre 0,1 et 10 mm.

9. Ensemble de toit selon la revendication 7, **caractérisé en ce que** la deuxième partie concave (34d2) a un rayon de courbure dans la plage comprise entre 0,1 et 10 mm.

10. Ensemble toit selon l'une quelconque des revendications précédentes, **caractérisé en ce que** l'extrémité fixe (34a) du au moins un élément de renforcement de toit (34) comprend une partie plate.

11. Ensemble de toit selon l'une quelconque des revendications précédentes, **caractérisé en ce que** le au moins un élément de renforcement de toit comprend une pluralité d'éléments de renforcement de toit (34 - 40) s'étendant chacun de manière transversale par rapport à la direction longitudinale (X) du toit (24) et étant séparés les uns des autres le long de la direction longitudinale du toit.

12. Véhicule (20) comprenant un ensemble de toit (22) selon l'une quelconque des revendications précédentes.
